(19) Europäisches Patentamt
European Patent Office
Office européen des brevets

(11) Veröffentlichungsnummer: **0 410 205 A2**

(12) **EUROPÄISCHE PATENTANMELDUNG**

(21) Anmeldenummer: **90113199.5**

(51) Int. Cl.[5]: **C09K 19/38**, C08F 8/00

(22) Anmeldetag: **11.07.90**

(30) Priorität: **25.07.89 DE 3924554**

(43) Veröffentlichungstag der Anmeldung: **30.01.91 Patentblatt 91/05**

(84) Benannte Vertragsstaaten: **AT BE CH DE DK ES FR GB IT LI NL SE**

(71) Anmelder: **RÖHM GMBH**
**Kirschenallee**
**D-6100 Darmstadt(DE)**

(72) Erfinder: **Omeis, Jürgen, Dr.**
**Ernst-Ludwig-Weg 48A**
**D-6101 Bickenbach(DE)**
Erfinder: **Endisch, Stefan**
**Lagerstrasse 29**
**D-6081 Riedstadt/ Crumstadt(DE)**

(54) **Anisotrope flüssigkristalline Polymer-Filme.**

(57) Die Erfindung betrifft anisotrope, flüssigkristalline Polymerfilme, bestehend aus einem photovernetzten, flüssigkristallinen Poly(meth)acrylsäureester PP.

EP 0 410 205 A2

Xerox Copy Centre

## GEBIET DER ERFINDUNG

Die Erfindung betrifft ein Verfahren zur Herstellung von insbesondere freitragenden anisotropen, flüssigkristallinen Polymerfilmen auf der Basis photovernetzter flüssigkristalliner Poly(meth)acrylate, die sich beispielsweise zur optischen Datenspeicherung eignen.

Stand der Technik

Flüssigkristalline Polymere haben insbesondere auf dem Gebiet der Informationsspeicherung große Aufmerksamkeit gefunden. (Vgl. G. Allen and J. Bevington, Comprehensive Polymer Science, Vol. 5, 701 - 732, Pergamon Press 1989).

Es ist bekannt, mit verschiedenen Methoden anisotrope, dünne, flüssigkristalline Polymerfilme zu orientieren und sie damit in flüssigkristalline Monodomänen überzuführen. Diese Orientierung kann z.B. vorgenommen werden

- durch elektromagnetische Felder (vgl. EP-A 0 231 856, EP-A 0 231 857, EP-A 0 231 858).
- durch Oberflächeneffekte (Deutsche Patentanmeldung P 38 25 066)
- durch mechanische Deformation (vgl. H. Finkelmann, K. Hammerschmidt, Makromol. Chem. 190, 1089 - 1101, 1989).

Die makroskopische Orientierung erfolgt allgemein in einem Temperaturbereich, der zwischen der Glastemperatur (Tg) und der Klärtemperatur (Tn,i) des Polymeren liegt, speziell bei flüssigkristallinen Seitenkettenpolymeren nahe der Klärtemperatur.

Aufgabe und Lösung

Erfahrungen mit den beiden erstgenannten Methoden zeigen, daß man immer an ein strukturiertes Trägermaterial und an bestimmte Schichtdicken gebunden ist. So lassen sich gemäß der deutschen Patentanmeldung P 38 25 066 problemlos Schichten von 1 - 2 µm orientieren.

Jedoch stößt die Methode bei Schichten im 10 - 20 µm-Bereich an ihre Grenzen. Solche Schichten wurden bisher über die Display-Technologie präpariert, was jedoch mit einer starken thermischen Belastung der Polymeren verbunden ist. Die dritte der genannten Methoden, die mechanische Deformation (Scheren, Verstrecken, Druck) wird zur Orientierung von flüssigkristallinen Hauptketten-Polymeren und vernetzten flüssigkristallinen Polymeren angewendet (vgl. R. Zentel, H. Finkelmann et al., Adv. Polym. Sci. 60/61; M. Gordon, Ed., S. 155 - 162, Springer-Verlag, Heidelberg 1984; R. Zentel et al., Makromol, Chem. 188, 665 - 674, 1987; H. Finkelmann et al., Mol. Cryst. Liq. Cryst. 142, 85 - 100, 1987).

Die Orientierung von flüssigkristallinen Elastomeren erfolgt analog zu den linearen Seitenkettenpolymeren unterhalb Tn,i (Übergang nematische → isotrope Phase) im kautschukelastischen Zustand und wird unterhalb der Glastemperatur eingefroren. Die bereits bekannten flüssigkristallinen Elastomeren weisen aber eine Reihe zusätzlicher Nachteile auf.

So besitzen vernetzte Polysiloxane sehr niedrige Glastemperaturen (< Raumtemperatur RT), so daß die Orientierung nur unter Spannung oder bei tiefen Temperaturen, die unterhalb Tg liegen, erhalten bleibt.

Bei den bisher bekanntgewordenen **vernetzten** flüssigkristallinen Poly(meth)acrylaten, die durch chemische Vernetzung hergestellt wurden, liegt die Tg zwar oberhalb RT, dagegen steht aber der Nachteil einer aufwendigen Filmpräparation und einer unzureichenden Homogenität der präparierten Filme. Es bestand daher die Aufgabe, geeignete, vernetzbare flüssigkristalline Polymere zur Verfügung zu stellen, die sich durch mechanische Deformation über einen zweckmäßig großen Schichtdickenbereich - als Anhalt sei 5 - 50 µm genannt -ohne Trägermaterial in einen makroskopisch orientierten, anisotropen Zustand überführen lassen.

Es wurde nun gefunden, daß sich die bestehende Aufgabe in besonders befriedigender Weise dadurch lösen läßt, daß man flüssigkristalline Poly(meth)acrylate mit eingebauten photovernetzbaren Gruppen einsetzt.

Die Erfindung betrifft daher anisotrope flüssigkristalline Polymerfilme, bestehend aus einem photovernetzten, flüssigkristallinen Poly(meth)acrylsaureester PP.

Die Erfindung betrifft ebenfalls ein Verfahren zur Herstellung anisotroper flüssigkristalliner - insbesondere freitragender-Polymerfilme sowie ihre Anwendung, insbesondere in der optischen Datenverarbeitung, wobei als Polymermaterial organolösliche photovernetzbare flüssigkristalline Poly(meth)acrylsäureester P′P′, die

man anschließend photovernetzt, eingesetzt werden.

Die photovernetzten flüssigkristallinen Poly(meth)acrylate PP

Die erfindungsgemäß erforderliche Photovernetzung der Polymerisate PP setzt voraus, daß in den organolöslichen Polymeren P′P′ photovernetzbare Gruppen anwesend waren, die bereits mindestens einen Teil der eingesetzten Monomeren bilden. Photovernetzbare Gruppen sprechen gewöhnlich auf Lichteinstrahlung im Wellenlängenbereich 250 - 450 nm an. (Zur Technik der Photovernetzung bei Polymeren vgl. S.G. Allen and J.C. Bevington, Comprehensive Polymer Science, Vol. 6, 135 - 148, Pergamon Press 1989; H.F. Mark et al., Kirk Othmer Encyclopedia of Chemical Technology, 3rd Ed., Vol. 17, pg. 680, J. Wiley & Sons, 1982; vgl. Mechanism of Photophysical Process and Photochemical Reactions in Polymers, J. F. Rabeck, J. Wiley & Sons, N.Y. 1987, S. 406 - 444). Spezifisch geeignet für die Zwecke der vorliegenden Erfindung sind solche Monomeren, welche photovernetzbare Einheiten als mesogene Gruppen enthalten. Als photovernetzbare Gruppen kommen allgemein solche chromophoren Gruppen infrage, die lichtinduziert kovalente, chemische Bindungen miteinander eingehen, wobei durch intermolekulare Reaktion Vernetzung entsteht. Andererseits müssen sich solche Gruppen als Bestandteile flüssigkristalliner Polymere eignen. Im Prinzip stellen Gruppen, die sich zur Photodimerisierung eignen, die einfachsten Vertreter dar.

Als Beispiele seien die Stilbengruppe, die Zimtsäuregruppe und die Chalcongruppe angeführt.

Als Monomere zur Einführung dieser Gruppen seien beispielsweise solche der Formel I

$$CH_2 = \underset{\displaystyle R}{\underset{|}{C}} - X - (CH_2)_n - Ar \qquad I$$

worin
R für Wasserstoff oder Methyl
X für eine Gruppe -COO- oder

$$-\overset{\displaystyle O}{\overset{\|}{C}}-\overset{\displaystyle R_1}{\overset{|}{N}}-,$$

worin $R_1$ Wasserstoff oder einen Alkylrest mit 1 bis 4 Kohlenstoffatomen bedeutet
Ar für einen Rest - Q - CM = CH - Q′
worin
Q die Bedeutung einer die Doppelbindung aktivierende Gruppe mit Mehrfachbindungscharakter, vorzugsweise ausgewählt aus der Gruppe bestehend aus

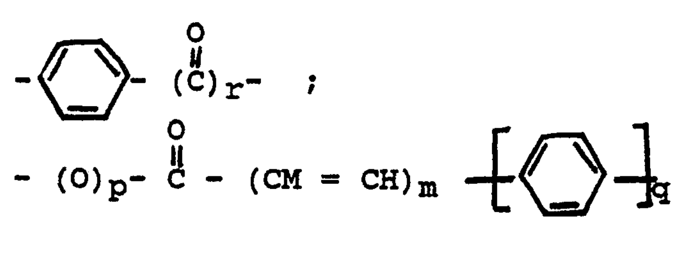

worin r, p, m und q unabhängig voneinander für null oder eins stehen und
worin
Q′ die Bedeutung Wasserstoff oder gegebenenfalls substituiertes Phenyl, Naphthyl, Furanyl oder ein Pyridiniumion oder

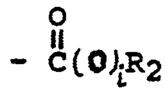 besitzt,

worin $R_2$ für einen Phenylrest oder eine Hydroxy- oder eine Alkoxygruppe mit 1 bis 6 Kohlenstoffatomen steht und i für null oder eins,
worin M die Bedeutung Wasserstoff oder - C ≡ N besitzt und
worin n für null oder eine ganze Zahl von 1 bis 14, vorzugsweise 2 bis 14 steht, oder
worin Ar für einen Rest

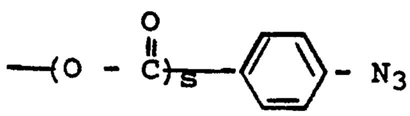

worin s null oder eins bedeutet,
steht.

In der Regel liegt der Gehalt der photovernetzbare Gruppen enthaltenden Monomeren an dem Poly(meth)acrylaten im Bereich 0,1 bis 20 Gew.-%, vorteilhaft zwischen 1 und 10 Gew.-%. Dabei ist darauf zu achten, daß die Gesamt-Komposition so gewählt wird, daß der flüssigkristalline Charakter und die gewünschten Eigenschaften der Polymerisate PP gewährleistet sind, die ihre technische Eignung bedingen. Durch Copolymerisation in geeigneter Zusammensetzung werden lösliche Copolymer hergestellt, vorzugsweise im Molekulargewichtsbereich $10^4$ - $10^6$ g/mol, bevorzugt > $10^5$ g/mol.

Die weiteren monomeren Bausteine können aus an sich bekannten Vertretern von Monomeren mit mesogenen Gruppen ausgewählt werden.
Im allgemeinen eigen sich Monomere der Formel II:

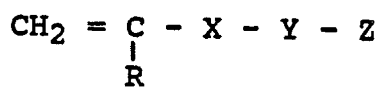 II

wobei
X und R die oben beschriebene Bedeutung besitzen und
Y eine Spacereinheit, vorzugsweise bestehend aus einer flexiblen Kette mit 1 bis 14, vorzugsweise 2 - 12 Kettengliedern, insbesondere einer Alkylengruppe $-(CH_2)_n-$ worin n für 1 bis 14, vorzugsweise 2 - 12 steht, wobei gegebenenfalls einzelne Kettenglieder substituiert sein können, beispielsweise mit $C_1$-$C_4$-Alkylresten oder mit Halogen wie Fluor oder Chlor, oder worin einzelne Kettenglieder durch eine Etherbrücke ersetzt sein können, oder einen Phenylenrest und
Z eine mesogene Gruppe
darstellt.

Die Herstellung der Monomeren vom Typ I und II ist an sich bekannt, bzw. sie kann in an sich bekannter Weise oder in Anlehnung an bekannte Verfahrensweisen vorgenommen werden. (Vgl. DE-A 36 23 395).
Eine Aufstellung geeigneter mesogener Gruppen findet sich in Kelker and Hatz, Handbook of Liquid Crystals, Verlag Chemie 1989, pp. 67 - 113.

In typischer Weise über die Einheiten X - Y gebunden ist eine beispielsweise aromatische Reste enthaltende mesogene Gruppe Z, die vorzugsweise durch die Formel III

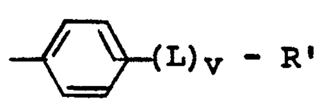 III

wiedergegeben werden kann, worin L für eine Brücke, bestehend aus den Resten - N = N -

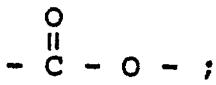 ; 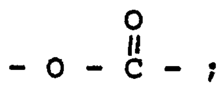 ; 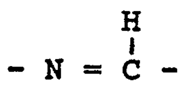 ; 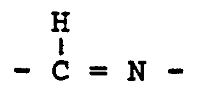 ; - CH = CH

oder für einen Rest

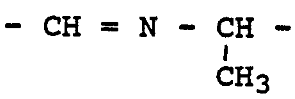 ; 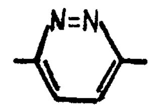 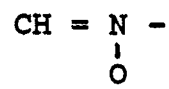 ; $- C \equiv C-$

v für Null oder Eins und R' für einen Rest

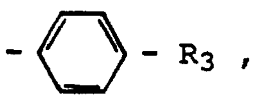 , 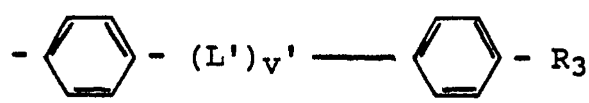

oder, falls v für Null steht, R' auch für einen Rest

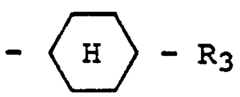 steht,

wobei L' und v' die gleiche Bedeutung wie L bzw. v besitzen und worin $R_3$ für Wasserstoff, $(O)_{s'}-(CH_2)_t-H$, -CN oder Halogen, insbesondere Fluor, Chlor oder Brom und t für eine Zahl von 1 bis 8, insbesondere 1 - 6, und s' für Null oder 1 steht.

Besonders genannt seien Polymere aus Monomeren der Formel II, worin Z für die folgenden mesogenen Gruppen steht:

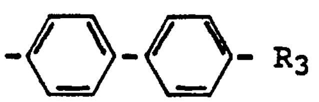 , 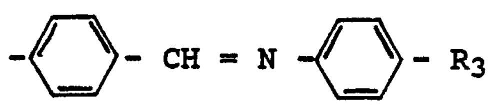

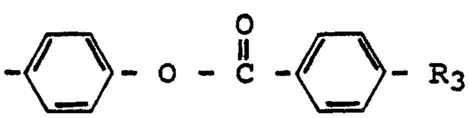 , 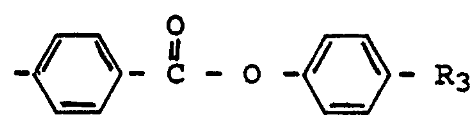

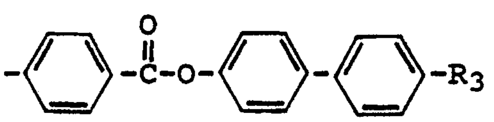 , 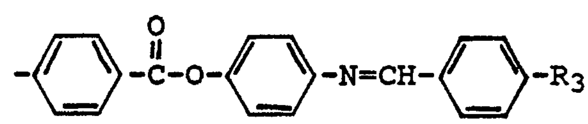

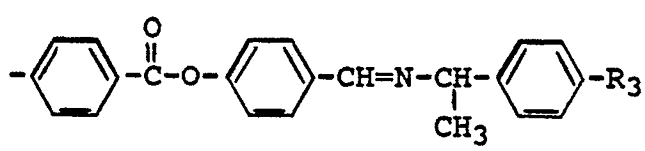 , 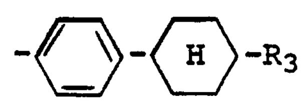

Bei einer besonders bevorzugten Ausführungsart der vorliegenden Erfindung steht Z für ein farbgebendes Strukturelement, stellt also einen Farbstoff F (siehe folgenden Abschnitt) dar. Der Anteil der den Farbstoff F enthaltenden monomeren Bausteine am Polymeren kann 0 bis 99 Gew.-% der gesamten Monomeren ausmachen, vorzugsweise liegt der Anteil bei ≧ 50 Gew.-%, in der Regel bei ≧ 10 Gew.-%, vorzugsweise jedoch bei mindestens 0,1 Gew.-%. Der Farbstoff F ist vorzugsweise dadurch charakterisiert, daß er unter Einwirkung des eingestrahlten Lichts Änderungen seiner Molekülgeometrie erfährt. Damit ist jedoch nicht verbunden, daß die Wellenlänge des eingestrahlten Lichts, in der Regel die des Schreiblasers,

mit dem Absorptionsmaximum des bzw. der Farbstoffe übereinstimmen muß, da z.B. eine Photoisomerisierung auch bei Bestrahlung außerhalb des Absorptionsmaximums stattfindet. Im übrigen gelten gewisse für Farbstoffe, die in Flüssigkristall-Systemen zur Anwendung kommen sollen, entwickelte Kriterien. (Vgl. J. Constant et al., J. Phys. D, Appl. Phys. Vol. II, S. 479 ff (1978); F. Jones u. T.J. Reeve, Mol. Cryst. Liq. Cryst. Vol. 60, S. 99 ff, EP 43 904, EP 55 838, EP 65 869). So sollen diese Farbstoffe im elektrischen Feld nicht ionisieren und sie sollen einen hohen molekularen Extinktionskoeffizienten besitzen.

Im allgemeinen gehorchen die erfindungsgemäß anwendbaren Farbstoffe F der Definition, daß ihre Absorptionsmaxima im Wellenlängenbereich 300 - 1 000 nm liegen.

Zweckmäßigerweise enthält der Farbstoff F mindestens ein Strukturelement, das unter der definierten Lichteinwirkung seine Geometrie ändert.
Solche Strukturelemente können z.B. Mehrfachbindungen enthalten, insbesondere weisen sie die Möglichkeit der trans-cis-Isomerie auf. Weiter kann es sich um andere isomeriefähige Systeme handeln, beispielsweise solche, die auf einer Ringöffnung und/oder einem Protonenübergang beruhen. In der Regel besitzt der Farbstoff F in seiner Vorzugsrichtung eine Länge von mindestens 10 Å. Als Beispiele für Brückengruppen - A -, die die geometrische Isomerie ermöglichen, seien die folgenden genannt:

$$-\underset{|}{C}=\overset{|}{C}- \; ; \; -N=N- \; ; \; -C=N- \; ; \; -N=\underset{\underset{O}{\downarrow}}{N}-$$

Insbesondere enthalten die Farbstoffe F solche Gruppen, bei denen zwei aromatische Ringe bzw. Ringsysteme durch eine Brückengruppe - A - verknüpft sind. Es handelt sich also im naheliegendsten Fall um isomerisierbare Derivate des Azobenzols, des Azoxybenzols, der Azomethine usw. Desweiteren enthalten die Farbstoffe F vorteilhaft an sich bekannte Substituenten, welche bestimmend für die Absorptionscharakteristika individueller Farbstoffe sind. (Vgl. Ullmanns Encyklopädie der Techn. Chemie, 3. Auflage, Bd. 7, 153 - 183, Urban & Schwarzenberg, 1956; vgl. J. Griffiths, Chem. in Britain, 997-1000, 1986, G. Hollas, JSDC, 285 - 294, 1979). Als geeignete Gruppen können z.B. die Cyanogruppe oder auxochrome Gruppen gelten, u.a. elektronenliefernde Substituenten wie (gegebenenfalls alkylierte) Amino-, Oxy- (Hydroxy-), bzw. Alkoxygruppen als auch Gruppen mit entgegengesetztem Effekt wie Nitro-, Nitroso-, Carbonyl-, Halogen-Gruppen u.ä. Eine besonders interessante Klasse stellen Azofarbstoffe dar, die den vorstehend erläuterten Kriterien genügen.

Entsprechende Azofarbstoffe sind z.B. in DE-A 34 06 209, DE-A 34 29 438, EP-A 65 869, M. Eich et al., Proc. SPIE-Int. Soc. Opt. Eng., 628 (Mol. Polym. Optoelectron. Mater.: Fundam. Appl., 93 - 96 (1987)) angegeben worden. Als Modelle für die erfindungsgemäß mit Vorteil anzuwendenden Farbstoffe F werden die folgenden Strukturen der Formel IV betrachtet, die - wie bereits ausgeführt -Bestandteile der photovernetzten flüssigkristallinen Polymeren PP sind:
$- AS - A - AS'$ IV
wobei - A - die oben angegebenen Bedeutungen als Brückengruppen vorzugsweise die Bedeutung - N = N -besitzen soll, und wobei das System sowohl (die an sich bekannten) Substituenten mit Elektronendonatorenwirkung als auch mit Elektronenakzeptorwirkung besitzen kann. AS hat dabei insbesondere die Bedeutung eines aromatischen Systems, vorzugsweise mit mindestens 6 und bis 14 Ringkohlenstoffatomen - insbesondere die Bedeutung Phenyl, das vorzugsweise über eine elektronenliefernde Brückengruppe wie eine Ethergruppe oder eine gegebenenfalls mit $C_1$-$C_4$-alkylsubstituierte Aminogruppe über einen weiteren zweckmäßig verknüpften, substituierten Phenylrest, oder auch direkt mit der abstandhaltenden Einheit (Spacer = Y in Formel II) verknüpft ist. AS bzw. AS′ können besonders als Bestandteile eines niedermolekularen Farbstoffs F die aus der industriellen Farbstoffchemie bekannten Substituenten wie $C_1$-$C_4$-Alkyl, Halogen, Cyan aber auch polare Gruppen wie z.B. die -COOH oder -$SO_3H$ bzw. -OH-Gruppen tragen.
AS′ hat ebenfalls die Bedeutung eines aromatischen Systems, vorzugsweise mit mindestens 6 und bis 20 Ringkohlenstoffatomen, vorzugsweise enthaltend wenigstens einen substituierten Phenylrest.

Beispielhafte Substituentenmuster des Phenylrests in AS′ bestehen aus:
wenigstens einer Nitrogruppe in ortho- oder para-Stellung zur Haftstelle von A, bevorzugt in para-Stellung,
gegebenenfalls mindestens einer Alkoxygruppe, vorzugsweise mit 1 bis 4 Kohlenstoffatomen,
gegebenenfalls mit mindestens einem Halogen-, insbesondere Chlorsubstituenten in ortho-, meta- und/oder para-Stellung,
einem weiteren, über Brückengruppe A, insbesondere über eine Azogruppe verknüpften aromatischen Rest AS″, der (analog AS′ aufgebaut) wiederum wie vorstehend angegeben substituiert sein kann,

oder einem Substituenten

$$(CN)_2C{=}CH-,\quad (CN)_2C = \overset{\displaystyle CN}{\overset{|}{C}} - ,\quad - CF_3.$$

Als Prototypen für Strukturen der Formel IV seien erwähnt:

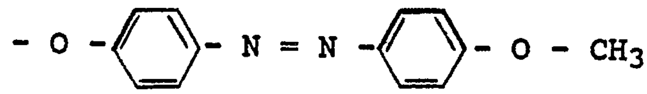

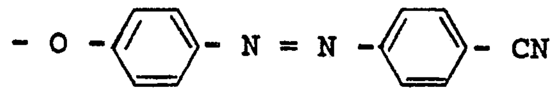

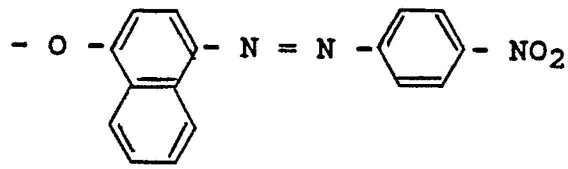

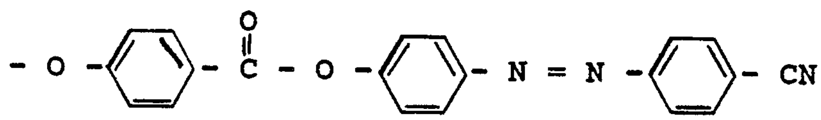

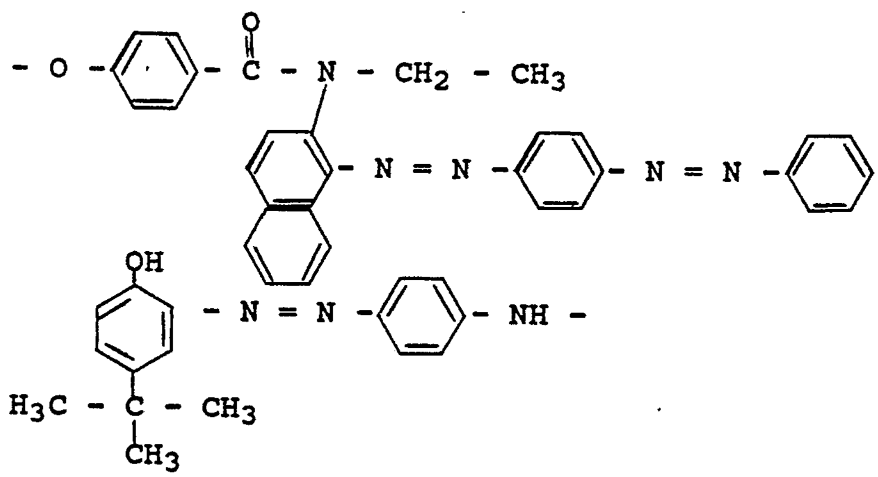

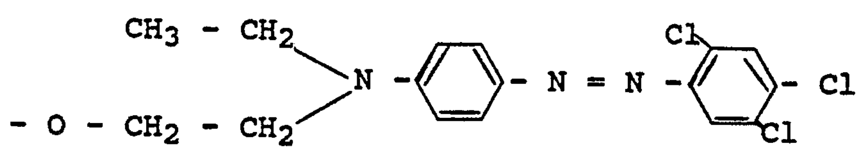

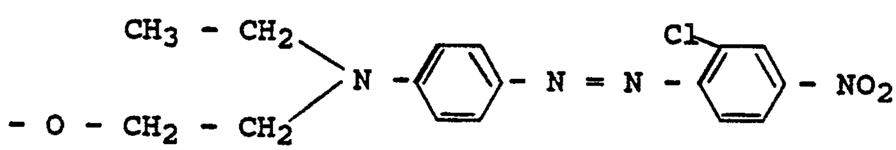

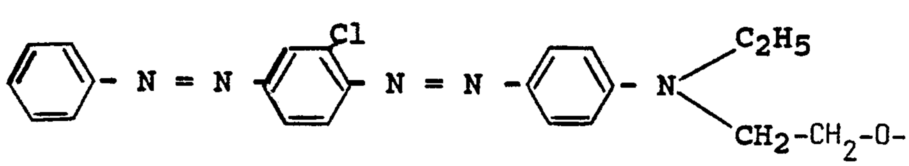

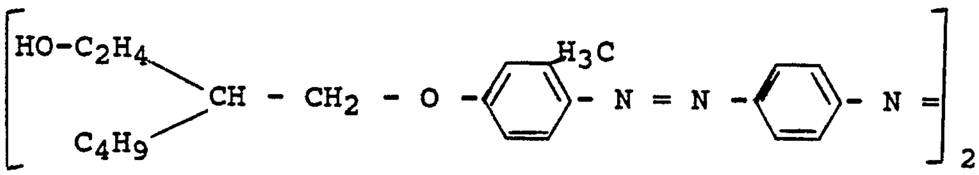

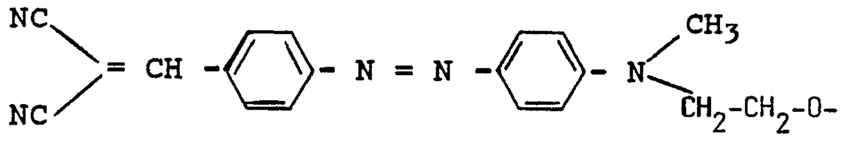

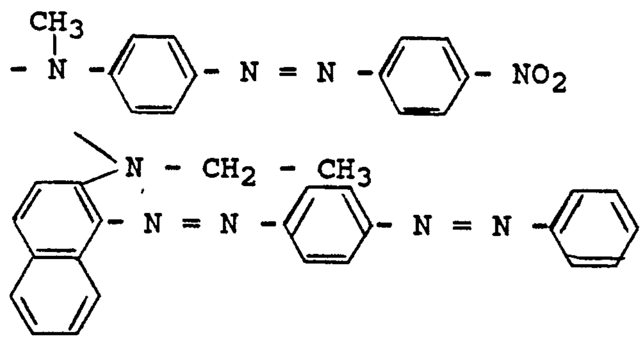

Die obigen Strukturelemente können (z.B. an der für eine Substitution vorgesehenen Stellung verknüpft) als farbgebendes Strukturelement Z fungieren.

Im allgemeinen liegt die Glastemperatur Tg der Polymeren, aufgebaut aus Monomeren der Gruppen I und II oberhalb 40 Grad C, bevorzugt zwischen 50 und 80 Grad C. (Zur Bestimmung der Glastemperatur Tg vgl. H.F. Mark et al. Encyclopedia of Polymer Science and Engineering, 2nd Ed., Vol, 7, pp. 531 - 544, J. Wiley & Sons 1989).

Die erfindungsgemäß eingesetzten Polymeren $P'P'$, aufgebaut aus den Monomeren der Formeln I und II sollen sich aus konzentrierter Lösung zu homogenen Filmen verarbeiten lassen. Im allgemeinen liegt der Gehalt an Polymeren $P'P'$ in den infragekommenden Lösungsmitteln LM im Bereich von 10 bis 90 Gew.-%, bevorzugt zwischen 30 und 60 Gew.-%. Als Lösungsmittel LM eignen sich insbesondere relativ polare Lösungsmittel bzw. Lösungsmittelgemische mit zweckmäßig nicht zu niederem Siedepunkt, die sich andererseits aber auch wieder in einfacher Weise, insbesondere durch Verdampfen entfernen lassen. Besonders geeignet sind Lösungsmittel, die auch als Medium bei der Polymerisation in Lösung dienen können. In erster Linie sind sauerstoff- und halogenhaltige Lösungsmittel geeignet, beispielsweise Ether wie Dioxan, Tetrahydrofuran, Ketone wie Methylisobutylketon, Cyclopentanon, Cyclohexanon, halogenierte Kohlenwasserstoffe wie Chloroform, Dichlormethan, Trichlorethan, Ester wie Butylacetat, Ethylenglycolacetat oder cyclische Carbonate oder Lactone wie z.b. Ethylencarbonat, so daß eine gewisse Mindestsiedetemperatur (≧ 40 Grad C bei Normalbedingungen) eingehalten wird.

Die Herstellung der Polymeren PP

Die Herstellung der Polymeren $P'P'$ kann in Anlehnung an die Polymerisationsverfahren des Standes der Technik durchgeführt werden. (Vgl. H. Rauch-Puntigam, Th. Völker, Acryl- und Methacrylverbindungen, Springer-Verlag 1967). Als Initiatoren kommen die an sich bekannten, insbesondere Azoverbindungen und Perverbindungen infrage, insbesondere die organolöslichen, die bei Lösungspolymerisation Verwendung finden, wobei die Temperaturabhängigkeit der Initiatorwirksamkeit und die Eigenschaften des Lösungsmittels (Sdp.) in Einklang gebracht werden sollten. (Vgl. F. H. Mark, Encyclopedia of Polymer Science and Technology, 2nd Ed., Vol, 15, 402 - 418, J. Wiley 1989). Genannt seien z.B. Azoisobutyronitril, tert. Butylperoctoat, Benzoylperoxid u.a..

Die Konzentrationen an Initiator liegen ebenfalls in den üblichen Bereichen, etwa bei 0,01 bis 2 Gew.-% bezogen auf die Monomeren. Gegebenenfalls können den Polymerisationsansätzen auch Regler, beispielsweise die üblichen Schwefelregler zugesetzt werden, jedoch erübrigt sich der Zusatz von Reglern bei

Lösungspolymerisationen meistens.
Die Temperatur des Polymerisationsverfahrens richtet sich u.a. nach dem Lösungsmittel, beispielsweise wenn unter Rückfluß gearbeitet wird, sie liegt im allgemeinen bei 20 - 100 Grad C, insbesondere bei 40 - 80 Grad C. Die Polymerisationsdauer liegt i.a. im Bereich von 12 bis 36 Stunden.
Das Polymer $P'P'$ kann aus der Lösung heraus zu Filmen verarbeitet werden, es kann aber auch mit einem Nicht-Lösungsmittel gefällt, gegebenenfalls getrocknet und bei Bedarf in Lösung gebracht werden, worauf es verarbeitet werden kann.

Herstellung von vernetzten Filmen aus Polymeren $P'P'$

Die Filme können in an sich bekannter Weise erzeugt, beispielsweise auf einen Träger aufgebracht werden. Dies kann z.B. durch Auftragen, Tauchen, Spin-Coating u.ä. geschehen. Anschließend wird das Lösungsmittel entfernt, beispielsweise durch Verdunsten unter den für Lösungsmittelverarbeitung geltenden Bedingungen.
Der Film kann anschließend noch z.B. im Trockenschrank getrocknet werden. Nach dem Trocknen wird die Vernetzung mittels UV-Bestrahlung herbeigeführt. Als UV-Quellen können die üblicherweise bei UV-induzierten Photo-Reaktionen, speziell Photo-Dimerisierungen verwendeten, zur Anwendung kommen, z.B. Punktstrahler oder Flächenstrahler mit Intensitäten von ≧ 0,2 $mW/cm^2$, vorzugsweise mit einem Wellenlängenbereich von 320 -400 nm.
Die UV-Bestrahlung wird vorteilhaft bei Temperaturen oberhalb Tg und unterhalb von Tn,i des Polymerisats $P'P'$ durchgeführt, kann aber auch bei Tn,i und bis zu 10 Grad C oberhalb stattfinden. Besonders vorteilhaft haben sich Temperaturen 10 - 20 Grad C unterhalb von Tn,i erwiesen.
Die Bestrahlungsdauer richtet sich nach Schichtdicke, Vernetzerkonzentration und Comonomerzusammensetzung und beträgt in der Regel zwischen 10 sec. und 10 min.
Anschließend wird der gebildete Polymerfilm verstreckt. Die Verstreckung erfolgt bei einer Temperatur von ca. 5 Grad C unterhalb Tn,i. Zusätzlich kann vor der Verstreckung 10 - 20 Grad C unterhalb Tn,i getempert werden, beispielsweise von 5 min bis 5 Stunden in Abhängigkeit von der Schichtdicke und vom Vernetzungsgrad. Der Verstreckungsgrad $\alpha$ = l/lo liegt zwischen 50 und 300 %, vorteilhaft über 100 %. Nach der Verstreckung wird die Probe langsam mit 10 K/min auf Raumtemperatur abgekühlt. Der erreichte Orientierungsgrad kann bei Raumtemperatur durch UV-VIS oder IR-Spektroskopie bestimmt werden.

Vorteilhafte Wirkungen

Der unmittelbare Vorteil des erfindungsgemäßen Verfahrens liegt einmal in der einfachen Präparation der Filme aus den Polymeren PP, weiter in der Möglichkeit, Orientierung der flüssigkristallinen Polymeren über einen weiten Schichtdickenbereich herbeizuführen und zwar ohne Anwendung eines **strukturierten** Trägermaterials. Es hat sich erwiesen, daß nach dem Verstrecken z.B. ab einer Dehnung von 100 % Orientierungsgrade wie in dünnen Schichten erreicht werden.

Die erfindungsgemäßen Filme eignen sich hervorragend für eine Vielzahl von Anwendungen, beispielsweise zur optischen Informationsspeicherung, insbesondere zur digitalen und holographischen reversiblen Datenspeicherung, als optische Komponenten u.ä. Desweiteren eignen sich die erfindungsgemäß hergestellten Materialien als Speichermaterial und/oder Abdeckmaterial für Mehrfachbeschichtungen z.B. als dünne Schichten auf einem Substrat.

Die folgenden Beispiele dienen zur Erläuterung der Erfindung.Dabei wurden die folgenden Monomeren als Prototypen ihrer jeweiligen Monomer-Klassen zur Herstellung der Polymeren PP verwendet:

**Monomeren der Formel I:**

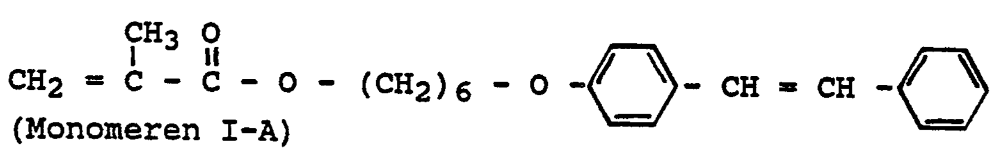

(Monomeren I-A)

Monomere der Formel II

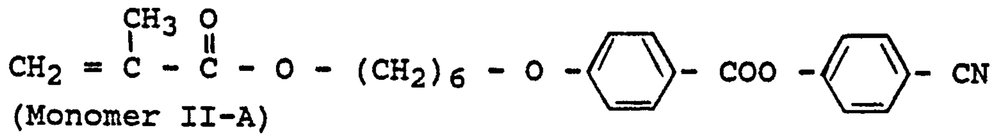

(Monomer II-A)

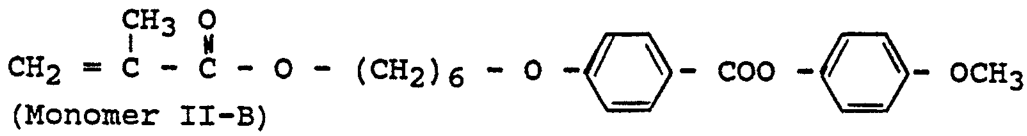

(Monomer II-B)

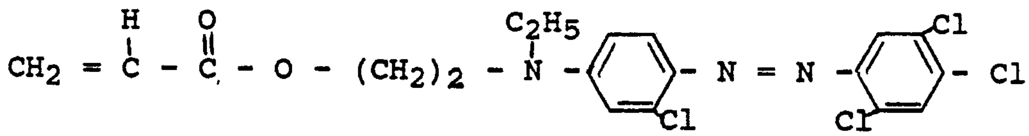

(Monomer II-C)

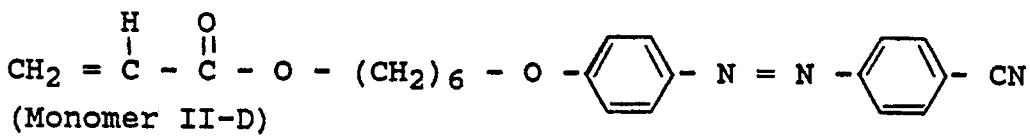

(Monomer II-D)

BEISPIELE

Beispiel 1

A. Polymerisation der flüssigkristallinen Polymeren P′P′-1

3,0 g (9 mmol) Monomer II-A, 187 mg (0,5 mmol) II-C und 154 mg (0,5 mmol) Monomer I-A werden in 4 ml Dioxan abs. gelöst und mit 0,1 mol% (bezogen auf die Gesamtmenge an Monomeren 2,2′-Azobis-(2,4-dimethylvaleronitril) versetzt. Nach dem Entgasen wird 12 Stunden bei 60 Grad C polymerisiert, wobei je 1 mal der genannte Initiator nach 2 Stunden (0,1 mol) und 1 mal Dilauroylperoxid (0,1 mol) nach 4 Stunden zugegeben wird. Anschließend wird in 20-fachem Überschuß an Methanol ausgefällt. Nach wiederholtem Umfällen wird das monomerfreie Polymere im Vakuum 5 Tage getrocknet. Man erhält das flüssigkristalline Praepolymere P′P′-1 der Formel:

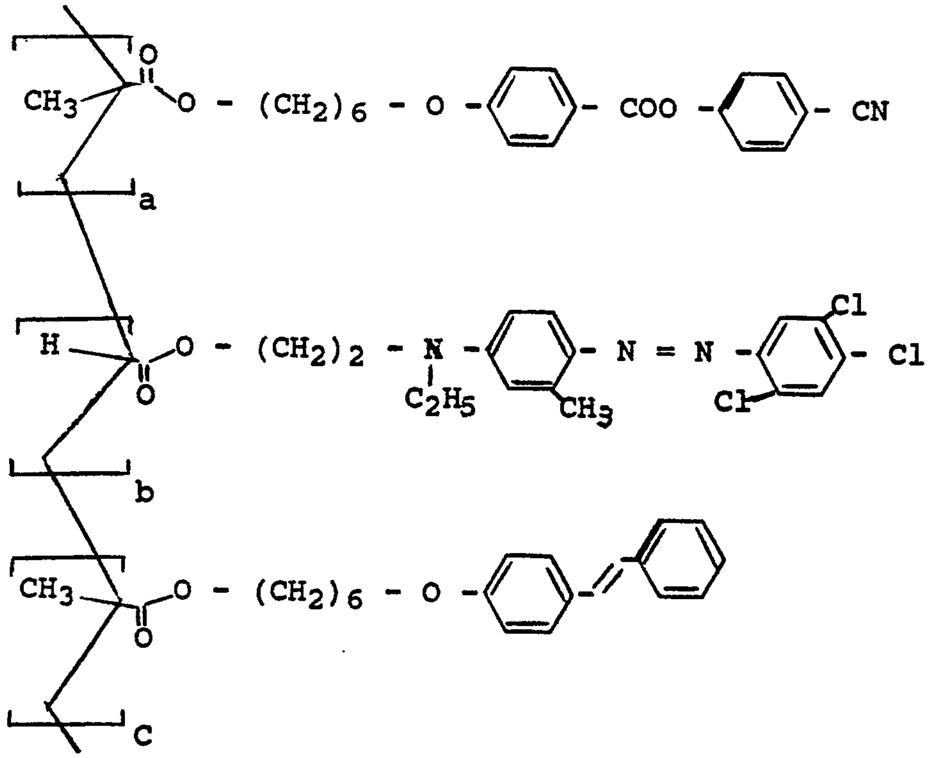

a = 95, b = 5, c = 5, a + b + c = 100 mol %
Ausbeute: 2,35 g = 70 %. d. Th.
Charakterisierung:
Mn = 142 000 g/mol
Tg = 45 Grad C
Tn,i = 100 Grad C.

B. Vernetzung der flüssigkristallinen Praepolymeren P′P′-1 zum Polymeren PP-1

Eine 50 %ige Lösung des Polymeren P′P′-1 (1g/1g) in $CH_2Cl_2$ wird staubfrei filtriert und auf einen hydrophobisierten Glasträger aufgetragen (50 µm-Rakel).
Nach dem Trocknen des Films bei Raumtemperatur wird ein Tag bei Raumtemperatur im Vakuum getrocknet. Es resultieren Filme mit Schichtdicken zwischen 15 und 35 µm, die nach 2 Varianten photovernetzt werden. Die Filme werden 2 min mit einer UV-Lampe (UV-P 200 $\lambda_{max}$ = 320 - 360 nm) im Abstand von 7,5 cm bestrahlt.
Variante 1: Bestrahlungstemperatur T > Tn,i
Variante 2: Bestrahlungstemperatur Tg < T < Tn,i
Die vernetzten Filme zeigen ein
Tn,i = 97 Grad C
Tg = 50 Grad C
und einen Quellungsgrad von
Qv = 9,37 in $CH_2Cl_2$ bei Raumtemperatur

C. Orientierung der vernetzten LC-Polymeren:

Die freipräparierten Filme werden 24 Stunden bei 50 Grad C getempert und anschließend bei 80 Grad C definiert verstreckt. Der Orientierungsparameter wird im verstreckten Zustand bei Raumtemperatur per UV-VIS charakterisiert (s. Abb 1 und 2).

$$\alpha = \frac{(l - l_o)}{l_o} \cdot 100 [\%] \; ; \qquad S = \frac{E_{\parallel} - E_{\perp}}{E_{\parallel} - 2E_{\perp}}$$

| Tab: | α | S |
|---|---|---|
| | 33 %<br>102 % | 0,35<br>0,40 |

Zum Vergleich wurde eine analoge Probe ohne Vernetzer in dünner Schicht auf oberflächenstrukturierten Träger per UV-ViS charakterisiert:
S = 0,38

Beispiel 2

A. Polymerisation der Praepolymeren P'P'-2

2,5 g Monomer II-B, 25,2 ml Monomer II-C und 117,5 mg Monomer I-A werden wie bei Beispiel 1 beschrieben in 2,5 ml Dioxan polymerisiert und aufgearbeitet.
Man erhält das flüssigkristalline Praepolymere P'P'-2 der Formel:

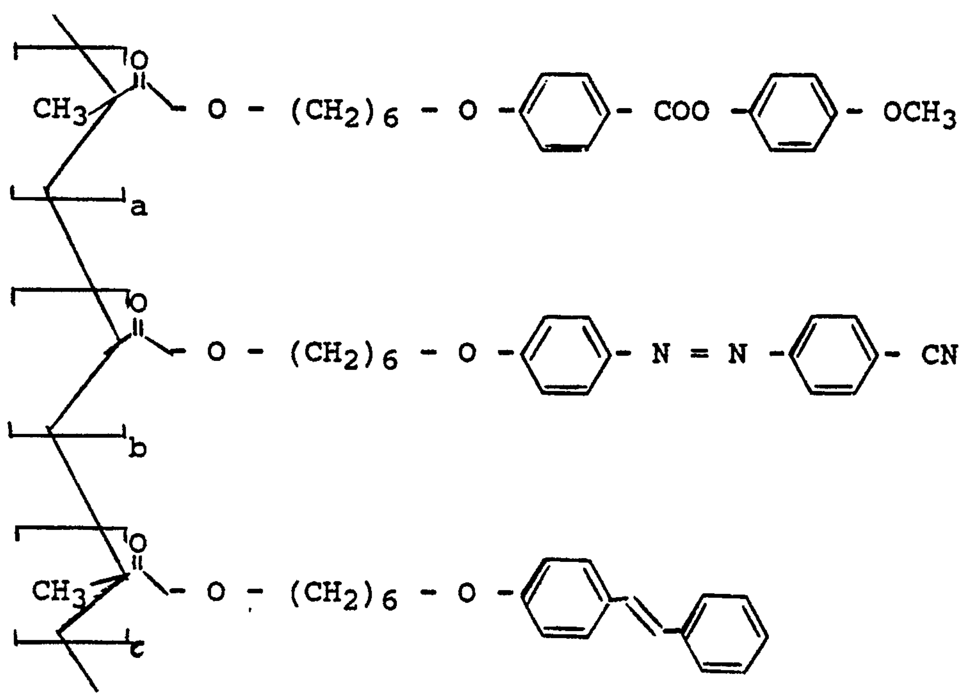

a = 94, b = 1, c = 5, a + b + c = 100 mol%
Ausbeute: 1,1 g = 42 % d.Th.
Charakterisierung:
Mn = 474 x $10^3$ g/mol
Tg = 30 Grad C
Tn,i = 110 Grad C

B. Filmpraeparation und Vernetzung zum Polymeren PP-2

Analog zu Beispiel 1 unter Verwendung einer 50 %igen Cyclopentanon-Lösung. Der vernetzte Film wird 1 Tag bei 90 Grad C im Vakuum getrocknet.
Tg = 45 Grad C
Tn,i = 102 Grad C.

C. Verstreckung

Die Proben werden 1 Tag bei 50 Grad C konditioniert und anschließend bei 85 Grad C bis zu $\alpha$ = 145 % verstreckt. Es resultiert ein Ordnungsparameter S = 0,55, bei einer Filmdicke von 15 - 20 $\mu$m.

Beispiel 3

A. Polymerisation des Polymeren P′P′-3.

2,6 g Monomer II-A, 26 ml Farbstoffmonomer II-A und 148 mg Stilbenmonomer I-A werden wie in Beispiel 1 beschrieben, in 3 ml Dioxan polymerisiert und aufgearbeitet. Man erhält das flüssigkristalline Praepolymere P′P′-3 der Formel

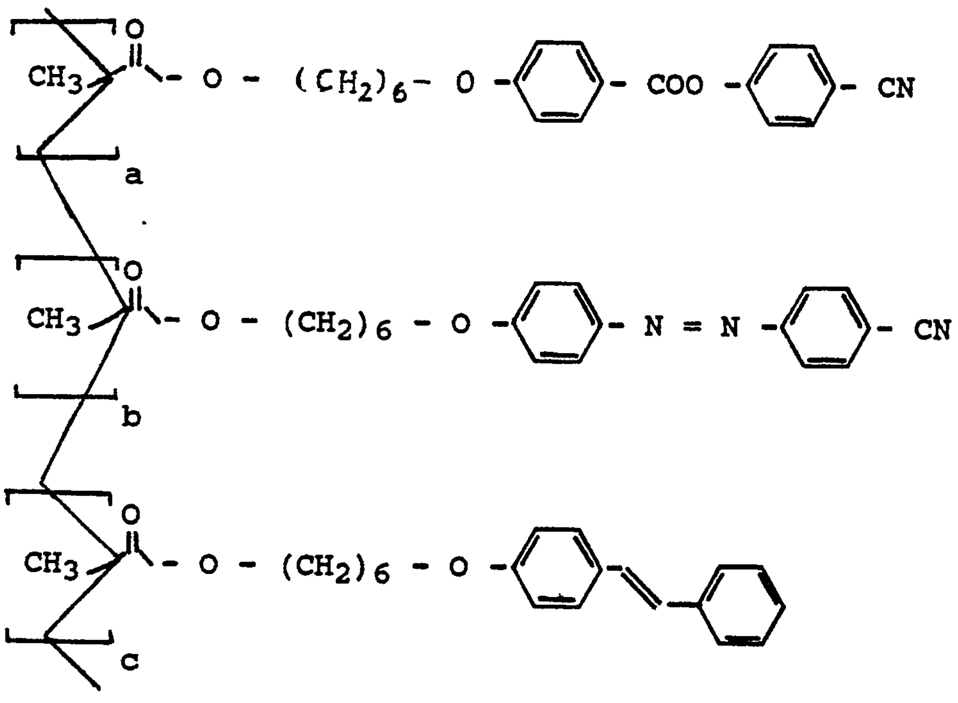

a = 95, b = 1, c = 4, a + b + c = 100 mol.
Ausbeute: 1,8 g = 67 % d.Th.
Charakterisierung:
Mn = 150 000 g/mol
Tg = 45 Grad C
Tn,i = 120 Grad C

B. Filmpraeparation und Vernetzung zum Polymeren PP-3

Analog zu Beispiel 1 aus 50 %iger $CH_2Cl_2$-Lösung Tg = 48 Grad C
Tn,i = 115 Grad C.

C. Verstreckung.

Die Verstreckung wird analog den Beispielen 1 und 2 nach 1 Tag bei 50 Grad C, bei 95 Grad C bis zu $\alpha$ = 120 %, durchgeführt; Filmdicke = 25 $\mu$m, S = 0,65.

**Ansprüche**

1. Anisotrope flüssigkristalline Polymerfilme, bestehend aus einem photovernetzten, flüssigkristallinen Poly(meth)acrylsäureester PP.
2. Verfahren zur Herstellung von anisotropen flüssigkristallinen Polymerfilmen gemäß Anspruch 1, dadurch gekennzeichnet,
daß als Polymere organolösliche, photovernetzbare, flüssigkristalline Poly(meth)acrylsäureester $P'P'$ eingesetzt werden, die anschließend zu den flüssigkristallinen Poly(meth)acrylsäureestern PP vernetzt werden.
3. Verfahren gemäß Anspruch 1, dadurch gekennzeichnet, daß die Poly(meth)acrylsäureester $P'P'$ Anteile von 0,1 bis 10 Gew.-% (bezogen auf die Gesamtheit der Monomeren) photovernetzbare Gruppen enthaltende Monomeren der Formel I

$$CH_2 = \underset{R}{\underset{|}{C}} - X - (CH_2)_n - Ar \qquad I$$

besitzen,
worin
R für Wasserstoff oder Methyl,
X für eine Gruppe -COO- oder $-CONR_1-$, worin $R_1$ Wasserstoff oder einen Alkylrest mit 1 bis 4 Kohlenstoffatomen bedeutet,
Ar für einen Rest - Q - CM = CH - $Q'$
worin
Q die Bedeutung einer die Doppelbindung aktivierenden Gruppe mit Mehrfachbindungscharakter, vorzugsweise ausgewählt aus der Gruppe bestehend aus

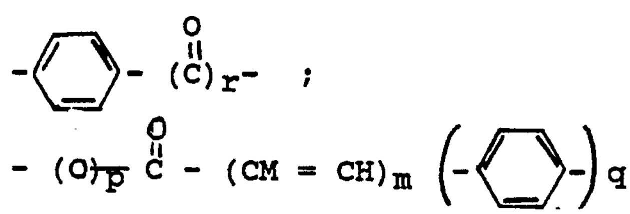

worin r, p, m und g unabhängig voneinander für null oder eins stehen und
worin
$Q'$ die Bedeutung Wasserstoff oder gegebenenfalls substituiertes Phenyl, Napthyl, Furanyl oder ein Pyridinumion oder

$$-\overset{O}{\overset{\|}{C}}(O)_i R_2 \text{ besitzt,}$$

worin $R_2$ für einen Phenylrest oder eine Hydroxy- oder eine Alkoxygruppe mit 1 bis 6 Kohlenstoffatomen steht und i für null oder eins
worin M die Bedeutung Wasserstoff oder - C ≡ N besitzt,
und
worin n für null oder eine ganze Zahl von 1 bis 14, vorzugsweise 2 bis 14 steht, oder

worin Ar für einen Rest

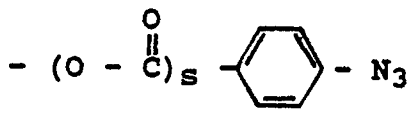

worin s null oder eins bedeutet, steht.

4. Verfahren gemäß den Ansprüchen 2 und 3, dadurch gekennzeichnet, daß die Poly(meth)acrylsäureester $P'P'$ zusätzlich zu den Monomeren der Formel I noch solche der Formel I

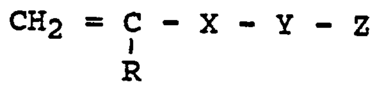

II

worin
R für Wasserstoff oder Methyl
X für eine Gruppe -COO- oder -CONR$_1$-, worin $R_1$ Wasserstoff oder einen Alkylrest mit 1 bis 4 Kohlenstoffatomen bedeutet
Y eine Spacereinheit mit 1 bis 14 Kettengliedern
Z eine mesogene Gruppe darstellt,
enthalten, wobei sich die Anteile der Monomeren der Formeln I und II zu 100 Gew.-% ergänzen.

5. Verfahren gemäß den Ansprüchen 2 bis 4, dadurch gekennzeichnet, daß die Filmbildung aus einer Lösung des Polymethacrylsäureesters $P'P'$ in einem organischen Lösungsmittel LM erfolgt.

6. Verfahren gemäß den Ansprüchen 2 - 5, dadurch gekennzeichnet, daß die Glastemperatur der Polymerisate $P'P'$ bei $T \geqq 40$ Grad C liegt.

7. Verfahren gemäß Anspruch 5, dadurch gekennzeichnet, daß der Siedepunkt des Lösungsmittels LM unter Normalbedingungen mindestens 40 Grad C beträgt.

8. Verfahren gemäß Anspruch 7, dadurch gekennzeichnet, daß die Lösungsmittel LM ausgewählt sind aus der Gruppe der Ether, der Ketone, der halogenierten Kohlenwasserstoffe, der Ester, inclusive cyclischer Carbonate und Lactone.

9. Verfahren gemäß den Ansprüchen 2 - 8, dadurch gekennzeichnet, daß man solche Lösungsmittel LM verwendet, die als Medium bei der Polymerisation der Monomeren I und II in Lösung dienen.

10. Verfahren gemäß den Ansprüchen 2 - 9, dadurch gekennzeichnet, daß die flüssigkristallinen Poly(meth)-acrylsäureester aus der Lösung in an sich üblicher Weise in Filmform überführt, von Lösungsmitteln LM befreit und durch UV-Bestrahlung, vorzugsweise bei Temperaturen oberhalb Tg, vernetzt und anschließend die vernetzten Poly(meth)acrylsäureester PP durch Verstrecken oberhalb Tg orientiert werden.

11. Freitragende, anisotrope flüssigkristalline Polymerfilme, hergestellt nach dem Verfahren gemäß den Patentansprüchen 2 - 10.

12. Polymerfilme gemäß Anspruch 11, dadurch gekennzeichnet, daß sie Schichtdicken zwischen 1 und 100 $\mu$m besitzen.

13. Verfahren gemäß den Ansprüchen 2 - 12, dadurch gekennzeichnet, daß die flüssigkristallinen Polymerfilme als Deckschichten oder Bestandteile eines Laminats, bestehend aus mehreren flüssigkristallinen Polymerschichten, eingesetzt werden.

14. Verfahren gemäß den Ansprüchen 2 - 13, dadurch gekennzeichnet, daß die Einzelschichten unterschiedliche Vorzugsorientierung, Farbstoffe, Monomere und Schichtdicke besitzen.

15. Verfahren gemäß den Ansprüche 2 - 14, dadurch gekennzeichnet, daß die Vorzugsorientierung durch die Verstreckrichtung geändert wird.

16. Verfahren gemäß den Ansprüchen 2 - 15, dadurch gekennzeichnet, daß der Polymerfilm selbst als Substrat für eine oberflächenorientierte Schicht dient.

17. Verwendung der freitragenden, anisotropen, flüssigkristallinen Polymerfilme, hergestellt nach den Ansprüchen 1 - 16 zur optischen Informationsspeicherung.

ABB 1. UV-VIS SPEKTRUM DES VERSTRECKTEN PP GEMÄSS BEISPIEL 1

α = 33 %
S = 0.34
d = 15 – 17 μm

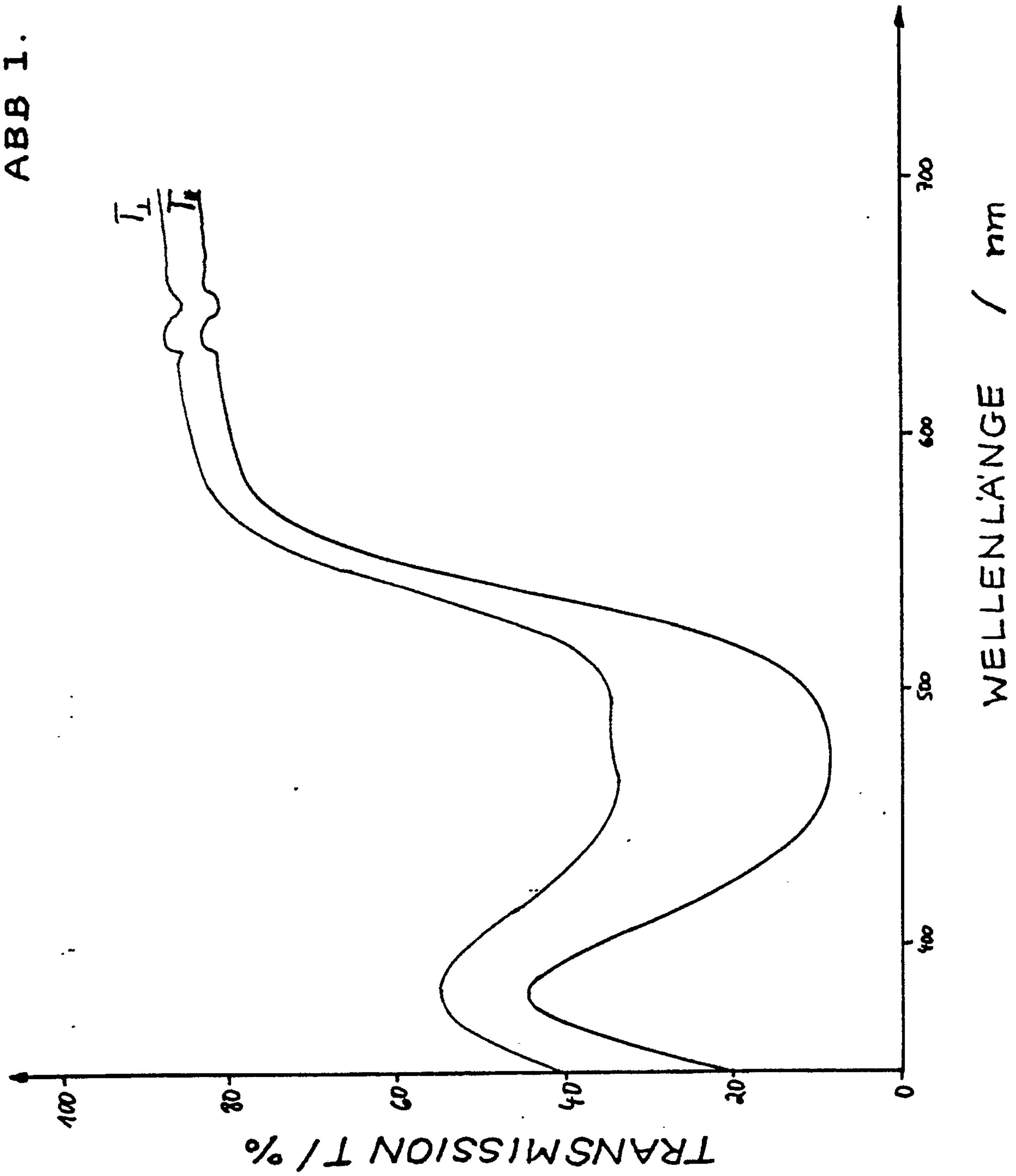

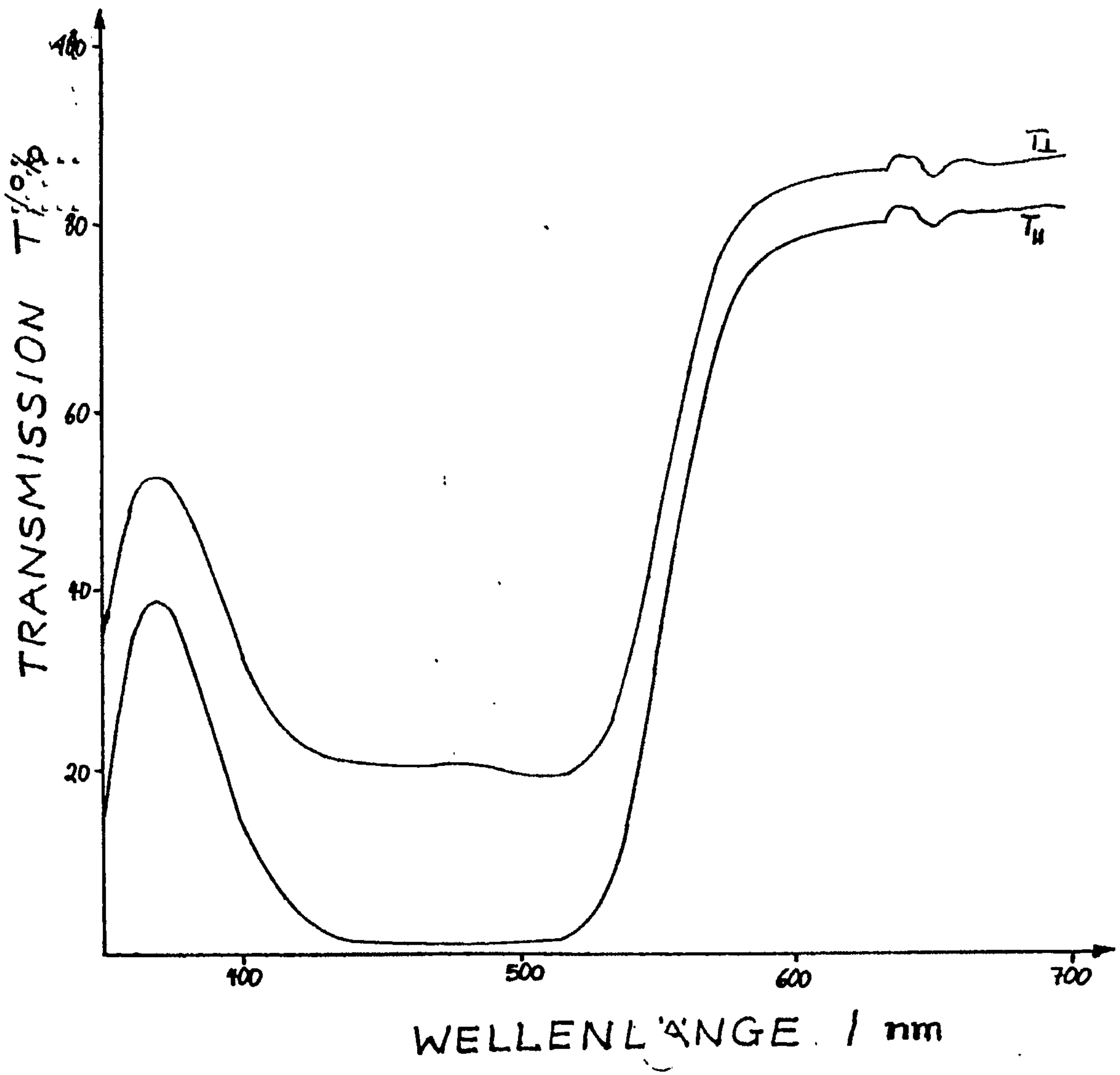


ABB. 2. UV-VIS SPEKTRUM DES VERSTRECKTEN PP GEMÄSS BEISPIEL 1

$\alpha$ = 102 %

S = 0.38

d = 30-35 μm